# EUROPEAN PATENT APPLICATION

(11) **EP 2 573 546 A1**
(43) Date of publication of application: **27.03.2013**
(21) Application number: 11783668.4
(22) Date of filing: 20.05.2011
(51) Int. Cl.: G01N 21/35, G01N 21/03, G01N 21/61

(54) **GAS SENSOR**

(30) Priority: 21.05.2010 JP 2010117445
(71) Applicant: National Institute of Advanced Industrial Science and Technology, Tokyo 100-8921 (JP); Miyama Giken Co., Ltd., Hachioji-shi, Tokyo 192-0012 (JP)
(72) Inventor: FURUTANI Hiroaki, Tsukuba-shi Ibaraki 305-8565 (JP); FUKAYA Toshio, Tsukuba-shi Ibaraki 305-8565 (JP); UCHIYAMA Taizo, Hachioji-shi Tokyo 192-0012 (JP)
(74) Representative: Piésold, Alexander James
(86) International application number: PCT/JP2011/061693
(87) International publication number: WO 2011/145736

(57) **Abstract**

A gas sensor includes a light source 17 configured to emit light for gas component estimation and a light detector 18 configured to receive light transmitted while being reflected in a cell. The cell includes a parallel flat-plate-shaped cell body 11 and a parallel-flat-plate-shaped lid member 12 mounted on the cell body 11, the cell body 11 includes a flat ellipsoidal-column shaped cell space 13 having a constant depth, the lid member 12 or the cell body 11 is formed with openings 16A, 16B configured to encourage gas to be measured to flow in and flow out, the light source 17 is provided on one focal line L1 of the cell space 13, the light detector 18 is provided on the other focal line L2 of the cell space 13, and an entire surface surrounding the cell space 13 is formed into a light reflecting surface. Accordingly, even when the length of optical path is increased, the cell is prevented from becoming three-dimensionally bulky, the amount of gas required for filling up the cell may be small, and a compact gas sensor having high sensitivity is provided.

## Description

### TECHNICAL FIELD

The present invention relates to a gas sensor configured to evaluate the type or the concentration of gas to be measured.

### BACKGROUND ART

In the related art, a gas sensor used for specifying the type of gas used as a sample or measuring the concentration of the same configured to irradiate the gas with light from a light source, guide the light transmitted through the gas linearly to a light detector, and detect attenuation of the light caused by absorbance of light by the gas with the light detector is known. Examples of gas sensors of this type include, for example, a configuration in which a light source and a light detector are arranged so as to face each other, and a sample cell containing gas enclosed therein is provided on a straight line connecting the light source and the light detector. In this configuration, if the concentration of the gas to be measured is lean, it is required to increase the length of an optical path in the sample cell where the light passes. As an attempt to obtain a longer optical path, there is a proposal to cause the light to reciprocate in the sample cell using a mirror (For example, see JP-A-10-2857 (Fig. 6)).

In this manner, although it is necessary to increase the length of optical path from the light source to the light detector in order to measure the concentration of lean gas, when the length of optical path is increased by the configuration in which the sample cell is arranged between the light source and the light detector arranged so as to face each other as described above, if the light from the light source is diverging light, the light intensity is abruptly decreased with increase in distance, and hence the light from the light source needs to be brought close to parallel rays in order to let the light reach long away. When bringing the light from the light source close to parallel rays, increase in the size of the sample cell and complication of the system configuration due to installation of a parabolic mirror at the light source portion and increase in cost become a problem.

Accordingly, a gas sensor employing a sample cell using two concave mirrors facing each other and having a constant thickness, and a common focal position, but different focal distances (different radius of curvature) is proposed (see JP-T-2007-514160 (Fig. 8, Fig. 13)). In this gas sensor, light parallel to the axis of the two concave mirrors enters from a light source provided at an adequate position of one of the concave mirrors, and the incident light is reflected by the surface of the other concave mirror and then is caused to pass the focal position of the two concave mirrors or the vicinity thereof, and the passed light is reflected by the surface of the other concave mirror so as to propagate in parallel to the axes of the two concave mirrors and received by a light detector provided on the other concave mirror.

JP-T-2007-514160 also discloses a configuration in which two concave mirrors having a constant thickness are configured as parabolic mirrors, and light from a light source provided on one of the concave mirrors is caused to enter toward two common focal positions, is reflected by the other concave mirror, is caused to pass through the focal positions, caused to repeat this reflection a several times, and is caused to be received by a light detector provided on the other concave mirror.

### SUMMARY OF THE INVENTION

### PROBLEMS TO BE SOLVED BY THE INVENTION

However, with the gas sensor having the sample cell composed of the two concave mirrors having a constant thickness and facing each other as described in JP-T-2007-514160, since the light source is arranged on one of the concave mirrors, and the light detector is arranged on the other concave mirror, if the length of optical path is increased, the sample cell becomes three-dimensionally bulky, so that there is a disadvantage that the amount of required gas to fill up the cell is increased.
The gas sensor described above has also a disadvantage in easiness of manufacture of the sample cell because two concave mirrors facing each other and having the constant thickness, and a common focal position, but the different focal distances (different radius of curvature) are used.
Furthermore, the gas sensor described above needs to use a light source emitting parallel light and hence is subjected to a limitation in selectivity of light sources.

The present invention resolves the problems of the related art as described above, and is intended to provide a gas sensor having a cell prevented from becoming three-dimensionally bulky even though the length of optical path is increased, and requiring only a small amount of gas for filling up the cell, being compact, having high sensitivity, having the cell which is easy to manufacture, and being compatible with both parallel light and diverging light as light emitted from the light source.

### MEANS FOR SOLVING THE PROBLEMS

In order to solve the above-described problems, a gas sensor of the present invention is a gas sensor configured to perform estimation of gas component flowing into a cell including a light source configured to emit light for gas component estimation and a light detector configured to receive light transmitted while reflecting in the cell, wherein the cell includes a parallel-flat-panel-shaped cell body and a parallel-flat-panel-shaped lid member mounted on the cell body, the cell body includes a flat ellipsoidal column shaped cell space having a given depth, the lid member or the cell body is formed with openings configured to encourage gas to be measured to flow in and flow out, the light source is provided on one focal line in the flat ellipsoidal column shaped cell space, the light detector is provided on the other focal line in the flat ellipsoidal column shaped cell space, and an entire surface surrounding the cell space is formed into a light reflecting surface.

Preferably, an optical filter having wavelength selectivity according to the type of the gas to be measured is arranged between the light source and the light detector. In this case, the optical filter is preferably arranged immediately before the light detector.

Preferably, the cell body defining a bottom surface of the flat ellipsoidal column shaped cell space is formed with a first opening, the light source is arranged below the first opening, and light emitted from the light source is radiated into the cell space through the first opening.

Preferably, the cell body defining a bottom surface of the flat ellipsoidal column shaped cell space is formed with a second opening, the light detector is arranged below the second opening, and light emitted from the light source is received by the light detector through the second opening.

In these cases, preferably, the diameter of the first opening is set according to a perspective angle from the light source so as to prevent the radiation angle of light from the first opening from becoming equal to or larger than a given angle with respect to the focal line, a conical lens is arranged in the vicinity of the first opening so as to prevent the radiation angle of light from the first opening from becoming equal to or larger than a given angle with respect to the focal line, and a convex mirror is arranged on a lower surface of the lid member facing the first opening so that the radiation angle of the reflected light becomes a predetermined angle.
Also, preferably, the incidence angle of light with respect to the light detector is controlled to be equal to or smaller than a given angle by adjusting the distance from the second opening to the light detector.

Also preferably, a concave mirror is arranged on the lower surface of the lid member facing the second opening to increase the amount of incident light onto the light detector.

It is also possible that the light source is arranged on the focal line in the cell, the shielding member or the reflecting member is arranged to limit the radiation angle of light from the light source.

It is also possible that a third opening is formed on the lower surface of the lid member facing the first opening, and another light detector for referencing a change with time of brightness of the light source is arranged on the upper side of the third opening.

It is also possible that the cell body is formed by bonding a first cell body portion having a flat ellipsoidal column shaped penetrating portion and a second cell body portion formed of a parallel flat plate each other.

Furthermore, it is also possible that the lid member is formed with one or more openings for encouraging the gas to be measured to flow in and flow out, and one or more of the openings are arranged on a line connecting two focal lines in the flat ellipsoidal column shaped cell space of the lid member.

### EFFECTS OF THE INVENTION

According to the present invention, a gas sensor having a cell prevented from becoming three-dimensionally bulky even though the length of optical path is increased, requires a small amount of gas for filling up the cell, and is compact and has high sensitivity is provided in comparison with a gas sensor having a sample cell configured by arranging two concave mirrors having a constant thickness so as to face each other as in JP-T-2007-514160.

Since an inner wall surrounding the cell space of the present invention has a flat ellipsoidal column shape, and the light source is provided on one of the focal lines and the light detector is provided on the other focal line, design of the cell is advantageously easy.

Furthermore, according to the present invention, since not only the parallel light, but also the diverging light may be used while limiting the radiation angle thereof, diversity may be provided in selectivity of light source.

### BRIEF DESCRIPTION OF THE DRAWINGS

Fig. 1 is an exploded perspective view illustrating a first embodiment.
Fig. 2 is a block diagram of a processing circuit system for a gas detection signal using the same.
Fig. 3 is a view illustrating an example of a signal acquired by the exemplified configuration of the first embodiment, in which (a) illustrates an example of a signal with N₂ gas, and (b) is an example of a signal with CO₂ gas (9000 ppm).
Fig. 4 is a partial schematic view illustrating a second embodiment.
Fig. 5 is a partial schematic view illustrating a third embodiment.
Fig. 6 is a partial schematic view illustrating a fourth embodiment.
Fig. 7 is an exploded perspective view illustrating a fifth embodiment.

### MODE FOR CARRYING OUT THE INVENTION

A gas sensor according to embodiments of the present invention will be described in detail below.
In this specification, the term "ellipsoidal column" means a column-shaped member having an ellipsoidal cross section and obtained by moving an ellipsoidal plane defined by an ellipsoidal periphery vertically. The term "focal line" means a line corresponding to trajectories of two focal points obtained when moving the ellipsoidal plane defined by the ellipsoidal periphery vertically and an extended line thereof.

### (First Embodiment)

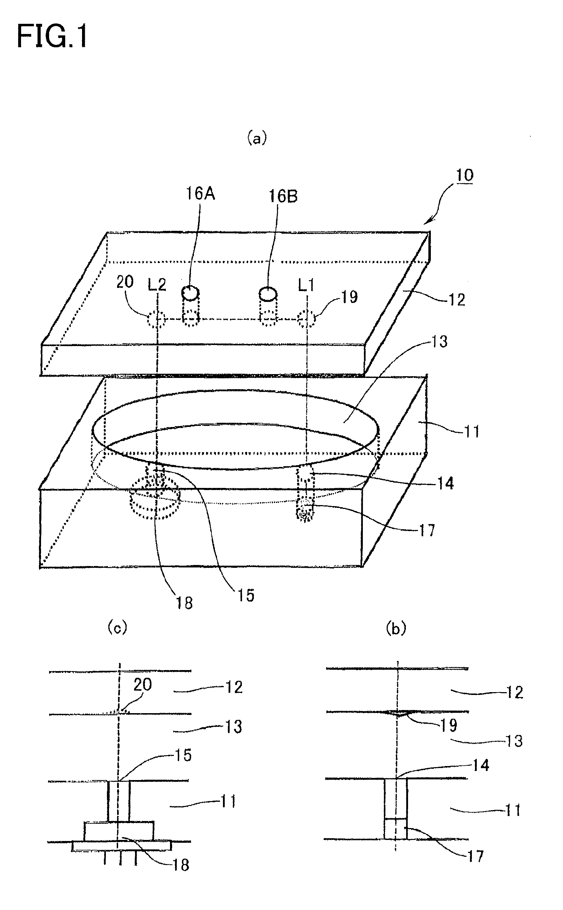

Fig. 1(a) is a perspective view schematically illustrating a cell which constitutes a gas sensor according to an embodiment of the present invention, Fig. 1(b) is an enlarged cross-sectional view schematically illustrating a light introducing portion and a light source, and Fig. 1(c) is an enlarged cross-sectional view schematically illustrating a light deriving portion and a light detecting portion.

A cell 10 constituting the gas sensor of this embodiment includes a cell body 11 formed of a parallel flat plate, and a lid member 12 formed of a parallel flat plate to be mounted on the cell body 11. The cell body 11 is formed with a cell space 13 having a constant depth (height) and a flat ellipsoidal column shape. A portion of the cell body 11 facing a bottom surface portion of the cell space 13 has an ellipsoidal shape, and has two focal points in the direction of a longitudinal axis. In this ellipsoidal shape, a sum of the lengths of two straight lines connecting the two focal points and a given point on a periphery of the ellipse are always equal, and an angle formed between the two straight lines and the circumference are equal to each other. In other words, assuming that the inner side of the periphery of the ellipse has reflective properties, a relationship is established in such a manner that light emitted from one of the focal points is reflected by the periphery of the ellipse and reaches the other focal point. This relationship is established in the ellipsoidal shape in a given cross section parallel to a bottom surface of the cell space 13 having a flat ellipsoidal column shape. In addition, this relationship is also established by light propagating off an ellipsoidal plane, and a trajectory of light projected on the ellipsoidal plane starts from the focal point and reaches the ellipsoidal circumference, and propagating towards the other focal point. This relationship is established even when reflection occurs by a plurality of times between the bottom surface of the cell space 13 and the lid member 12.

In a state in which the lid member 12 is mounted on the cell body 11, the cell space 13 is a sealed space except for gas openings 16A, 16B described later. An entire surface that is, an ellipsoidal belt-like wall surface, surrounding the cell space 13, a lower surface of the lid member 12, and a surface of the cell body 11 are formed of a reflecting surface having a high reflectance with respect to a light of wavelengths effective for gas component estimation. The material which constitutes the reflecting surface is preferably selected so as to have a reflectance of 90% or higher according to the type of gas to be measured. In this manner, the reflecting surface having high reflectance effectively prevents attenuation of the light intensity of transmitted light and blocks entry of outside light. The material which constitutes the cell body 11 and the lid member 12 may be a synthetic resin, and may be metallic alloy such as stainless steel (SUS or the like) or aluminum. Furthermore, the cell body 11 and the lid member 12 may be formed by performing a press work or a cutting work on a metallic plate such as aluminum. When the synthetic resin or the stainless steel is employed, a thin film of a material having high reflectance such as gold, silver, or aluminum is formed over the entire surface. As a method of forming thereof, a known method such as electroplating, vacuum deposition, spattering, and ion plating may be used. In this case, in order to enhance the adhesion strength, an underlayer such as nickel or chrome may be provided. When a material having high reflectance such as aluminum is used for the cell body 11 and the lid member 12, formation of the thin film as described above is not necessary, and an inner surface may be polished.

A bottom surface of a flat ellipsoidal column shaped depression corresponding to the cell space 13 of the cell body 11 is formed with a column-shaped light introducing port 14 having a predetermined depth along one focal line L1 and is formed with a column-shaped light deriving port 15 having a predetermined depth along the other focal line L2.

The lid member 12 is formed with two of the gas openings 16A, 16B configured to encourage gas to flow in and out from the cell space 13 on a line connecting the focal line L1 and the focal line L2. As a matter of course, the number of the openings 16A, 16B is not limited to two, and may be one or three or more, and the shape thereof may be shaped other than the column shape. These openings may be provided on the side of the cell body 1. The total surface area of the openings is preferably 5% or lower of the total surface area of the reflecting surface surrounding the cell space 13 in view of light-concentrating efficiency. Furthermore, a filter formed of a material suitable configured to allow gas to be measured to pass therethrough and prevent entry of foreign substances such as dust, contaminant, or outside light may be provided on the upper side of the openings 16A, 16B.

A light source 17 composed of an incandescent lamp is arranged on the bottom side of the light introducing port 14, and a light detector 18 configured to receive light transmitted by being reflected in the cell is arranged on the bottom side of a light deriving portion 16. The light source 17 is arranged so that a filament is centered at the one focal line L1. As a matter of course, various light sources configured to emit parallel light other than the filament lamp emitting diverging light may be employed as the light source 17. In this case, needless to say, the wavelength of light emitted from the light source is suitable for evaluation of gas to be measured. As the light detector 18, various light-receiving elements configured to receive light emitted from the light source 17 such as photodiode, thermopile, and infrared sensor with high sensitivity may be used.

Preferably, an optical filter (not illustrated) having wavelength selectivity according to the type of gas to be measured is provided immediately before the light detector 18. As the optical filter, for example, those obtained by forming a dielectric film having wavelength selectivity according to the type of gas to be measured on the surface of glass or silicon by a method such as vapor deposition may be used. In this case, in order to obtain the wavelength selectivity equivalent to the wavelength selectivity of the optical filter with respect to the light from the direction of the focal line L2, an angle of incidence to the light deriving port 15 with respect to the focal line L2 is preferably within 30 degrees. Depending on the case, the above-described optical filter may be provided at a proper position between the light introducing port 14 and the light deriving port 15.

In the configuration as described above, gas to be measured is introduced from the openings 16A, 16B into the flat ellipsoidal column shaped cell space 13 and the introduced gas to be measured is irradiated with light from the light source 17 arranged at the light introducing port 14. The irradiated light is reflected many times between a reflecting surface formed on the lower surface of the lid member 12 and a reflecting surface formed on the surface of the flat ellipsoidal column shaped depression of the cell body 11, then is subjected to regular reflection from a reflecting surface formed on a side surface of the flat ellipsoidal column shaped depression of the cell body 11, further repeats reflection between parallel flat plates of the cell space 13, then forms an image on the focal line L2 in the vicinity of the light deriving port 15, and the light is guided to the light detector 18 via the light deriving port 15.

At this time, even when the light irradiated from the light introducing port 14 is subjected to regular reflection between the reflecting surface formed on the lower surface of the lid member 12 and the reflecting surface formed on the surface of the flat ellipsoidal column-shaped depression of the cell body 11, since a vector component which contributes to a property of concentrating from the one focal line L1 toward the other focal line L2 does not change, the light radiated from the light source 17 arranged on the one focal line L1 may be efficiently transmitted finally to the light detector 18 arranged on the other focal line L2, so that a gas sensor which is compact and has high sensitivity may be realized without becoming three-dimensionally bulky even though the length of optical path is increased.

Subsequently, in this embodiment, a consideration to be made to increase the length of optical path will be described. In order to do so, the radiation angle of light from the light introducing port 14 with respect to the focal line L1 may be reduced. When θ is the radiation angle, the length of optical path may be increased by an amount corresponding to approximately 1/sinθ in comparison with a case where the length of optical path extends at the radiation angle of 90 degrees in parallel to the lid member and hence is the minimum length. For example, when the distance is to be multiplied by three, the value of θ may be set to 19.47 degrees. In this manner, in order to limit the radiation angle of light from the light introducing port 14 to be small, it is preferable to consider the arrangement and configuration of the light source 17 in the light introducing port 14.

As one of considerations, there is a method of forming a non-reflecting area which does not reflect light on an inner surface of the light introducing port 14. The non-reflecting area is set to be within a range of a predetermined distance from the front surface of the light source 17, and colored into a mat black or formed as a rough surface. For example, assuming that the diameter of the light introducing port 14 is 2 mm, the non-reflecting area is formed within a range of approximately 6 mm from the front surface of the light source 17. By forming the non-reflecting area, the radiation angle of light from the light introducing port 14 falls within a range of approximately 20 degrees.

In the case described above, the radiation angle of light ranges widely from 0 degree to approximately 20 degrees. Since only light in the vicinity of 20 degrees is necessary for this purpose, a convex mirror 19 is formed on the lower surface of the lid member 12 facing the light introducing port 14 so as to bring the radiation angle of the reflected light close to a target angle (20 degrees in this example). The shape of the convex mirror 19 is preferably a shape gradually increasing in gradient from the bottom as expressed by the figure of Mt. Fuji. However, in a case where the distance between the lower surface of the lid member 12 and the bottom surface of the flat ellipsoidal column shaped depression of the cell body 11 is 5 mm for example, the radiation angle of the reflected light may be in the vicinity of a target angle of 20 degrees, namely within a range from 12.5 to 25.0 degrees when using a convex conical mirror having a diameter of 2 mm and a conical apex angle of 167.5 degrees.

In order to achieve further improvement of the sensitivity, the diameter of the light deriving port 15 is set to twice the diameter of the opening of the light introducing port 14 or larger, so that a substantially entire amount of part of introduced light which concentrates to the vicinity of the focal line L2 on the side of the light deriving port 15 is allowed to be guided to the light deriving port 15. Furthermore, the wavelength selectivity of the optical filter provided immediately before the light detector 18 has an angle dependency with respect to the incidence angle of light, and hence the incidence angle needs to be set to an angle within approximately 30 degrees. However, in the arrangement of this system, the distribution of the incidence angle is equal to the distribution of the radiation angle at the light introducing portion. In this example, since the distribution converges within approximately 20 degrees, the conditions of the incidence angle are satisfied without making a specific consideration.

In a case where the size of the light-receiving surface of the light detector 18 is smaller than the diameter of the light deriving port 15, even though the diameter of the light deriving port 15 is increased, part of light which does not reach the light-receiving surface may be increased, which is an adverse effect. In this system, since the conditions of the incidence angle described above is relatively loose, a method of configuring the portion from the light deriving port 15 to the light-receiving surface of a reflecting surface having a tapered shape which is gradually reduced in diameter is also possible.

In a case where the size of the light-receiving surface of the light detector 18 is, for example, 2 mmφ, and is the same as the diameter of the light deriving port 15, unlike the system of forming into a tapered shape, a concave mirror 20 is formed on the lower surface of the lid member 12 facing the light deriving port 15 where the light detector 18 is provided at the position of the focal line L2. In this configuration, part of the light concentrating onto the focal line L2 provided for the light detector 18 which concentrates to the vicinity of the focal line L2 on the lid member 12 and does not enter the light deriving port 15 after the reflection when the concave mirror 20 is not provided may be directed into the light deriving port 15, whereby the light intensity which the light detector 18 can receive may be increased. In other words, where θ is the radiation angle of light, and d is the distance between upper and lower parallel flat surfaces of the cell space 13, if the radius of the light deriving port 15 is set to dsinθ, approximately half the light intensity concentrating to the focal line L2 passes through the light deriving port 15, and with the formation of the concave mirror 20, almost entire part of light is allowed to pass therethrough.

With the method described above, the incidence angle of light to the light detector 18 falls within a range of 25 degrees, and little variation in wavelength selectivity occurs in comparison with a case where the incidence angle is 0 degree, and hence an error generated by dependency of the wavelength selectivity of the optical filter on the incidence angle of light may be inhibited.

According to the gas sensor of this embodiment, with the configuration as described above, identification of the type and measurement of the concentration of gas to be measured are enabled. In other words, since the wavelength and the absorbance of light are different depending on the type of gas, the concentration of the gas to be measured may be found by changing the wavelength of the transferred light between the light source 17 and the light detector 18 and, when the type of the gas to be measured is known, by obtaining the rate of attenuation according to the concentration of the gas to be measured using light having a wavelength according to the gas to be measured. In this case, the relationship between the concentration of the gas to be measured and the rate of attenuation of light needs to be obtained in advance. As the gas to be measured, measurement of various types of gas such as carbon dioxide, carbon monoxide, methane, propane, ethyl alcohol having a light absorbing wavelength region from 2 to 5 µm is possible. Measurement of the gases to be measured having different types may be performed by setting the wavelength of light emitted from the light source 17 and the wavelength selectivity of the optical filter adequately.

Here, a design example of a gas sensor used when monitoring the concentration of the gas to be measured, which is carbon dioxide, will be shown. In the case of carbon dioxide, since the absorption of infrared ray having a wavelength of approximately 4.2 µm is significant, the amount of absorption may be monitored. As an optical filter used for the light detector 18, the one configured to transmit an infrared ray having a wavelength of approximately 4.2 µm is used. As a material of the reflecting surface formed on a surface surrounding the cell space 13, for example, gold having a reflectance of 98% with respect to the infrared ray having this wavelength is used, and the reflecting surface surrounding the cell space 13 is mirror-finished having a roughness equal to or smaller than µm. As an example of dimensions of the flat ellipsoidal column shaped cell space 13, a focal interval of 25.0 mm, a long axis of 40.0 mm, a short axis of 31.2 mm, a column length of 5.0 mm, a light introduction port diameter of 2.0 mm, a light deriving port diameter of 2.0 mm, and a diameter of gas openings of 4.0 mm at two positions are exemplified. In this case, the average length of optical path from the light source 17 to the light detector 18 is approximately 120mm, which is three times of 40 mm. If the column length is increased, the number of times of reflection from the light source 17 to the light detector 18 is decreased and the amount of light is increased, while the entire cell space 13 is increased in size, so that the capacity of the cell is increased and the amount of required gas and the amount of the reflecting material are increased as well. In a case where a point light source such as a laser beam may be used as the light source 17 and the angle of light radiation may be fixed clearly, the column length may be adjusted to focus on the light detector 18.

In the case of the exemplified configuration given above, assuming the light-concentrating efficiency when the reflectance of an inner surface of the cell is set to 100% is 1, the light-concentrating efficiency is 0.74 when the reflectance is 98%, and 0.54 when the reflectance is 95%. In a prototype gas sensor, the appearance is 50 mm × 40 mm × 17mm, and if compared with a case where a linear conduit line is provided, the maximum dimension is reduced to approximately one-third. Although the number of gas openings is set to two here, in the case of a diameter of 4.0 mm, the number of gas openings is preferably 20 or less (5% of the entire surface area of the reflecting surface in the cell space 13 or lower) in view of the light-concentrating efficiency.

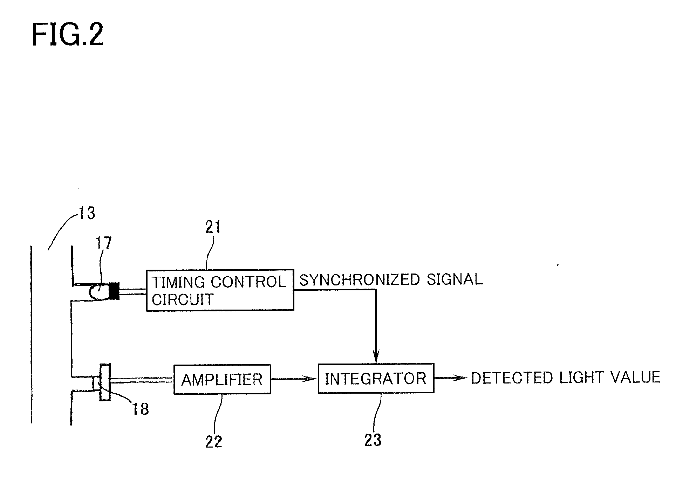

Here, a circuit system of the gas sensor of this embodiment will be described. Fig. 2 is a block diagram schematically illustrating a circuit system in a case where the concentration of the gas to be measured is measured. When measuring the concentration of the gas to be measured, a timing control circuit 21 configured to bring the light source 17 into a pulsed driving is provided. An electric signal output from the light detector 18 is amplified and extracted by an amplifier 22, and the extracted signal is integrated by an integrator 23 on the basis of synchronization from the timing control circuit 21 to obtain a detected light value.

The concentration of the gas to be measured is calculated from a numerical value table including the detected light values from the integrator 23 and concentrations of the gas to be measured in one-to-one correspondence in advance or a relational expression. This computation may be achieved by using a microcomputer as well as the timing control and the integration described above. Then, an output of the obtained concentration is displayed on the display or notified by an alarm.

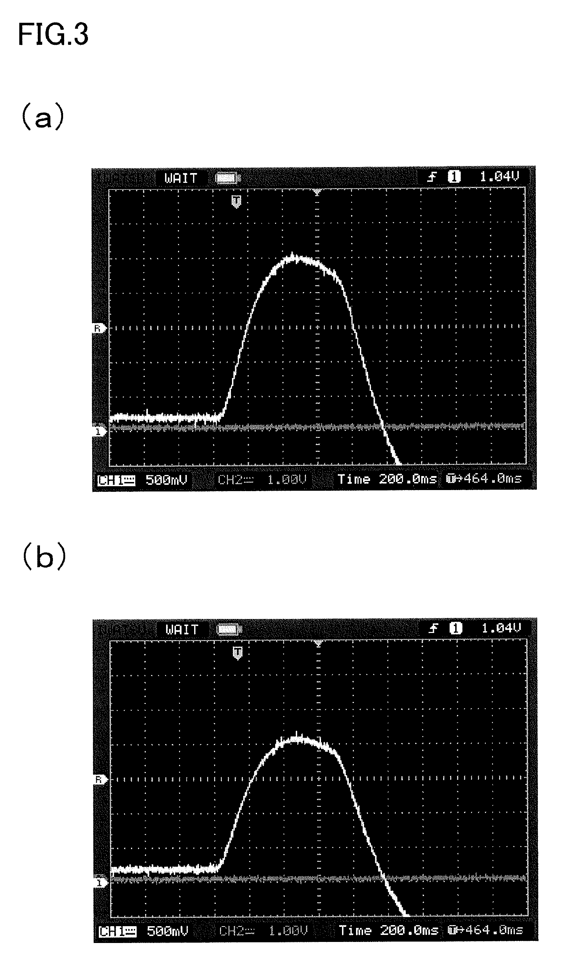

Examples of a signal acquired by the above-described exemplified configuration of the embodiment are shown in Fig. 3. Fig. 3 (a) illustrates an example of a signal with N₂ gas, and Fig. 3 (b) illustrates an example of a signal with CO₂ gas (9000 ppm). A point of measurement is an output from the amplifier 22 in Fig.2, and oscilloscope conditions are 200 mS/one scale for abscissa and 500 mV/one scale for ordinate.

### (Second Embodiment)

This embodiment is substantially the same as the first embodiment except that the method of light introduction is different. As shown in Fig. 3, when the filament of the light source 17 is sufficiently small, and the light from the light source 17 may be collimated to substantially parallel rays by a convex lens 24 arranged in the proximity thereto, a convex conical surface mirror 25 is arranged on the lower surface of the lid member 12 facing the light introducing port 14, and the radiation angle of the reflected light to be a target angle (20 degrees in this example). For example, when the size of the filament is 0.5 mm, if the convex lens 24 having a diameter of 3 mm and a focal distance of 6 mm is used, parallel rays having a diffusion of approximately ± 2.4 degrees are achieved and the light is reflected by the convex conical surface mirror 25 having a diameter of 3 mm and a conical apex angle of 160 degrees when the distance between the parallel plates is 5 mm in the cell space 13, and the radiation angle of the reflected light may be set to 20 (target angel) ± 2.4 degrees of a target angle.

### (Third Embodiment)

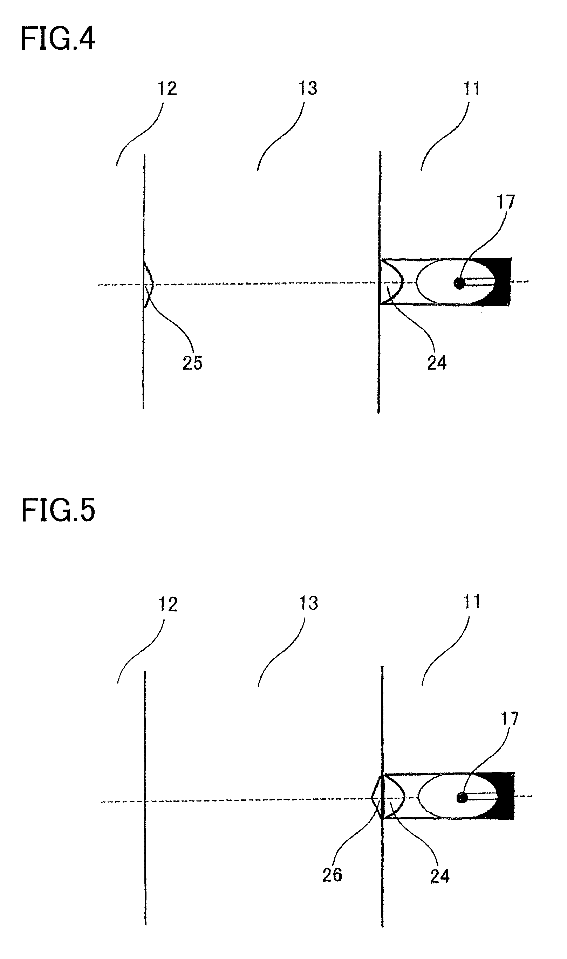

In this embodiment, in the same manner as the second embodiment, in a case where the light may be collimated to substantially parallel rays by the convex lens 24 placed in the proximity of the light source 17, a conical (axicon) lens 26 may be arranged after the convex lens 24 as illustrated in Fig. 4 to bring the light to a light flux radiating in a conical shape having a constant incidence angle. For example, when the size of the filament is 0.5 mm, if the convex lens 24 having a diameter of 3 mm and a focal distance of 6 mm is used, parallel rays having a diffusion of approximately ± 2.4 degrees are achieved, and may be refracted by the conical (axicon) lens 26 molded with a plastic having an index of refraction of 1.4 and having an apex angle of 162.8 degrees, so that the radiation angle of light may be set to 20 (target angle) ± 2.4 degrees.

### (Fourth Embodiment)

Although this embodiment is substantially the same as the first embodiment, in order to reference a change with time of brightness of the light source 17, an opening 27 is formed on the lower surface of the lid member 12 as a center of the focal line L1 on the focal line L1 on which the light source 17 is placed, a light detector 29 is provided on the bottom side of the opening 27 as illustrated in Fig. 5, and the light incident onto the opening 27 is captured by the light detector 29, and this detection signal is used. For example, the opening 27 of 0.5 mm is provided on an opposite side of the light source 17, and reference light is guided to the light detector 29 via the opening 27. Accordingly, correction of the change with time of brightness of the light source over a long term may be facilitated.

### (Fifth Embodiment)

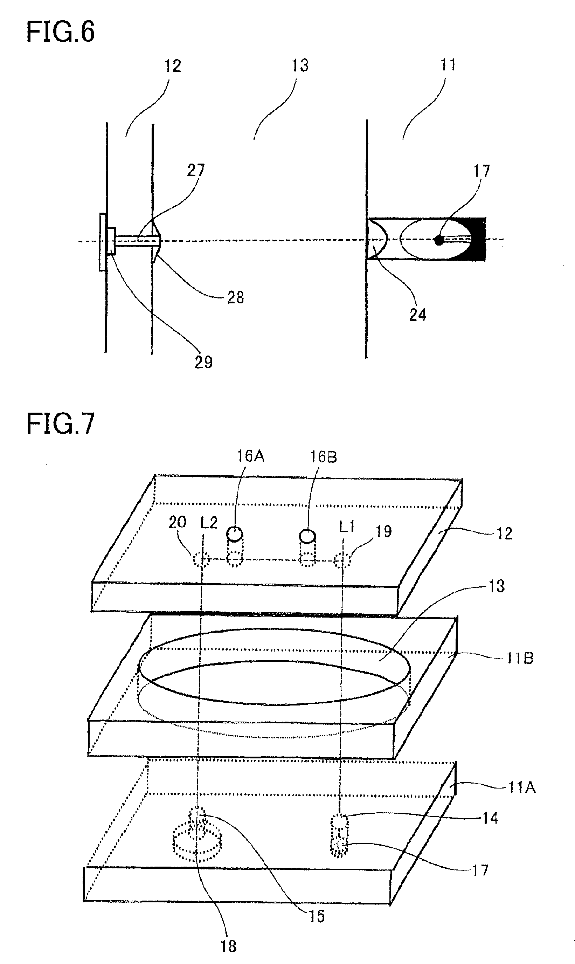

Although this embodiment is substantially the same as the first embodiment, as illustrated in Fig. 6, the cell body 11 is prepared by being divided into two parts, that is, into a first cell body portion 11A and a second cell body portion 11 B. The cell 10 is composed of three parts. The second cell body portion 11 B is formed with the flat ellipsoidal column shaped cell space 13 so as to penetrate therethrough. The second cell body portion 11 B is combined by being sandwiched between the first cell body portion 11A and the lid member 12 to form the same space as the flat ellipsoidal column shaped cell space 13 described in the first embodiment. In this form, manufacture is advantageously facilitated much further in comparison with the first embodiment.

Although the present invention has been described with the embodiments thus far, the present invention is not limited to these embodiments, and various modifications may be made.
For example, although the light source 17 is provided on the bottom side of the light introducing port 14 formed on the cell body 11 in the above-described embodiments, a configuration in which the light source 17 is arranged on the focal line L1 within the cell space 13 and a conical or cylindrical shielding member or reflecting member may be arranged so as to limit the radiation angle of light from the light source is also applicable.
Also, the limitation of the radiation angle of the incident light may be performed by adjusting the position of the light source 17.

### EXPLANATION OF REFERENCE NUMERALS

- 10: cell
- 11: cell body
- 11A: first cell body portion
- 11B: second cell body portion
- 12: lid member
- 13: cell space
- 14: light introducing port
- 15: light deriving port
- 16A, 16B: opening for gas
- 17: light source
- 18: light detector
- 19: convex mirror
- 20: concave mirror
- 21: timing control circuit
- 22: amplifier
- 23: integrator
- 24: convex lens
- 25: conical surface mirror
- 26: axicon lens
- 27: opening
- 28: convex mirror
- 29: light detector

## Claims

1. A gas sensor configured to perform estimation of gas component flowing into a cell comprising a light source configured to emit light for gas component estimation and a light detector configured to receive light transmitted while reflecting in the cell, wherein:
the cell includes a parallel-flat-panel-shaped cell body and a parallel-flat-panel-shaped lid member mounted on the cell body;
the cell body includes a flat ellipsoidal column shaped cell space having a given depth;
the lid member or the cell body is formed with openings configured to encourage gas to be measured to flow in and flow out;
the light source is provided on one focal line in the flat ellipsoidal column shaped cell space;
the light detector is provided on the other focal line in the flat ellipsoidal column shaped cell space; and
an entire surface surrounding the cell space is formed into a light reflecting surface.

2. The gas sensor according to Claim 1, wherein an optical filter having wavelength selectivity according to the type of the gas to be measured is arranged between the light source and the light detector.

3. The gas sensor according to Claim 2, wherein the optical filter is arranged immediately before the light detector.

4. The gas sensor according to any one of Claims 1 to 3, wherein the cell body defining a bottom surface of the flat ellipsoidal column shaped cell space is formed with a first opening, the light source is arranged below the first opening, and light emitted from the light source is radiated into the cell space through the first opening.

5. The gas sensor according to any one of Claims 1 to 4, wherein the cell body defining a bottom surface of the flat ellipsoidal column shaped cell space is formed with a second opening, the light detector is arranged below the second opening, and light emitted from the light source is received by the light detector through the second opening.

6. The gas sensor according to Claim 4 or 5, wherein the diameter of the first opening is set according to a prospective angle from the light source so as to prevent the radiation angle light from the first opening from becoming equal to or larger than a given angle with respect to the focal line.

7. The gas sensor according to Claim 4 or 5, wherein a conical lens is arranged in the vicinity of the first opening so as to prevent the radiation angle of light from the first opening from becoming equal to or larger than a given angle with respect to the focal line.

8. The gas sensor according to Claim 4 or 5, wherein a convex mirror is arranged on a lower surface of the lid member facing the first opening so that the radiation angle of the reflected light becomes a predetermined angle.

9. The gas senor according to any one of Claims 5 to 8, wherein the angle of incidence of light with respect to the light detector is controlled to be equal to or smaller than a given angle by adjusting the distance from the second opening to the light detector.

10. The gas sensor according to any one of Claims 5 to 9, wherein a concave mirror is arranged on the lower surface of the lid member facing the second opening to increase the amount of incident light onto the light detector.

11. The gas sensor according to any one of Claims 1 to 3, wherein the light source is arranged on the focal line in the cell space, a shielding member or a reflecting member is arranged to limit the radiation angle of light from the light source.

12. The gas sensor according to any one of Claims 1 to 7, wherein a third opening is formed on the lower surface of the lid member facing the first opening, and another light detector for referencing a change with time of brightness of the light source is arranged on an upper side of the third opening.

13. The gas sensor according to any one of Claims 1 to 12, wherein the cell body is formed by bonding a first cell body portion having a flat ellipsoidal column shaped penetrating portion and a second cell body portion formed of a parallel flat plate each other.

14. The gas sensor according to any one of Claims 1 to 13, wherein the lid member is formed with one or more openings configured to encourage the gas to be measured to flow in and flow out, and one or more of the openings are arranged on a line connecting two focal lines in the flat ellipsoidal column shaped cell space of the lid member.
